(19) Europäisches Patentamt
European Patent Office
Office européen des brevets

(11) **EP 4 443 356 A1**

(12) **EUROPEAN PATENT APPLICATION**

(43) Date of publication:
**09.10.2024 Bulletin 2024/41**

(21) Application number: **24164617.3**

(22) Date of filing: **19.03.2024**

(51) International Patent Classification (IPC):
***G06Q 10/06*** *(2023.01)*

(52) Cooperative Patent Classification (CPC):
**G06Q 10/06**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **03.04.2023 JP 2023060431**

(71) Applicant: **TOYOTA JIDOSHA KABUSHIKI KAISHA**
**Toyota-shi, Aichi-ken, 471-8571 (JP)**

(72) Inventors:
• **NITTA, Iwao**
**TOYOTA-SHI, AICHI-KEN, 471-8571 (JP)**
• **FUJIWARA, Teruyoshi**
**TOYOTA-SHI, AICHI-KEN, 471-8571 (JP)**
• **SUZUKI, Ryota**
**TOYOTA-SHI, AICHI-KEN, 471-8571 (JP)**

(74) Representative: **Cabinet Beau de Loménie**
**158, rue de l'Université**
**75340 Paris Cedex 07 (FR)**

(54) **INFORMATION PROCESSING DEVICE, INFORMATION PROCESSING METHOD, AND INFORMATION PROCESSING SYSTEM**

(57) An information processing device (1) determines whether a predetermined target value regarding a predetermined traceability item has been achieved based on information regarding the predetermined traceability item included in product information regarding each of a plurality of included products included in the target product. In addition, when a determination is made that the predetermined target value regarding the predetermined traceability item has not been achieved, the information processing device (1) specifies at least one first product required to be improved regarding the predetermined traceability item from among the included products. Then, the information processing device (1) outputs an improvement request for the predetermined traceability item for the first product.

**FIG. 13**

**Description**

BACKGROUND OF THE INVENTION

1. Field of the Invention

The present disclosure relates to an information processing device, an information processing method, and an information processing system.

2. Description of Related Art

Japanese Unexamined Patent Application Publication No. 2004-171146 (JP 2004-171146 A) discloses a system that manages data between a plurality of companies forming a supply chain. In the system disclosed in JP 2004-171146 A, a management server connected to each company via a communication line includes a transaction product database. The transaction product database stores product information corresponding to a product for which a contract has been concluded between a vendor company and a customer company.

SUMMARY OF THE INVENTION

The present disclosure provides a technology that can promote improvement regarding a predetermined traceability item for a target product in which a predetermined target value regarding a predetermined traceability item has not been achieved.

A first aspect of the invention relates to an information processing device including a control unit that is configured to:

acquire product information regarding each of a plurality of included products included in a target product, the product information including information regarding a predetermined traceability item for a corresponding one of the included product;

determine whether a predetermined target value regarding the predetermined traceability item has been achieved based on the information regarding the predetermined traceability item included in the acquired product information;

specify at least one first product required to be improved regarding the predetermined traceability item from among the included products when the control unit determines that the predetermined target value regarding the predetermined traceability item has not been achieved; and

output an improvement request for the predetermined traceability item for the first product.

In the first aspect, outputting an improvement request for the predetermined traceability item in the first product may include notifying an account of a supplier of the at least one specified first product of the improvement request.

In the first aspect, specifying at least one first product from among the included products may include preferentially specifying, as the first product, an included product in which a value of the predetermined traceability item included in the product information does not satisfy a reference value determined for each included product.

In the first aspect, the product information of each included product may include information indicating whether information regarding the predetermined traceability item is inventory data or actual measurement data, and specifying at least one first product from among the included products may include preferentially specifying, as the first product, an included product in which information regarding the predetermined traceability item included in the product information is inventory data.

In the first aspect, specifying at least one first product from among the included products may include specifying the first product based on a predetermined priority order of improvement requests for the included products.

In the first aspect, the priority order of the predetermined improvement requests may be set such that an included product on an upstream side is higher than an included product on a downstream side in a product tree indicating a relationship between each of the included products included in the target product.

In the first aspect, the priority order of the predetermined improvement requests may be set such that an included product on a downstream side is higher than an included product on an upstream side in a product tree indicating a relationship between each of the included products included in the target product.

In the first aspect, the priority order of the predetermined improvement requests may be set such that an included product that has a large degree of influence on a value of the predetermined traceability item is higher than an included product that has a small degree of influence.

In the first aspect, the control unit may be further configured to receive a completion notification from a terminal associated with a supplier of the at least one first product indicating that improvement of the predetermined traceability item has been completed for the first product after outputting an improvement request for the predetermined traceability item for the first product, specify at least one second product required to be improved regarding the predetermined traceability item from among products other than the at least one first product among the included products when the control unit again determines that the predetermined target value regarding the predetermined traceability item has not been achieved after receiving the completion notification, and output an improvement request for the predetermined traceability item for the second product.

A second aspect of the invention relates to an information processing method including:

acquiring product information regarding each of a plurality of included products included in a target product, the product information including information regarding a predetermined traceability item for a corresponding one of included products;

determining whether a predetermined target value regarding the predetermined traceability item has been achieved based on the information regarding the predetermined traceability item included in the acquired product information;

specifying at least one first product required to be improved regarding the predetermined traceability item from among the included products when a determination is made that the predetermined target value regarding the predetermined traceability item has not been achieved; and

outputting an improvement request for the predetermined traceability item for the first product.

In the second aspect, outputting an improvement request for the predetermined traceability item for the first product may include notifying an account of a supplier of the at least one specified first product of the improvement request.

In the second aspect, specifying at least one first product from among the included products may include preferentially specifying, as the first product, an included product in which a value of the predetermined traceability item included in the product information does not satisfy a reference value determined for each included product.

In the second aspect, the product information of each included product may include information indicating whether information regarding the predetermined traceability item is inventory data or actual measurement data, and specifying at least one first product from among the included products may include preferentially specifying, as the first product, an included product in which information regarding the predetermined traceability item included in the product information is inventory data.

In the second aspect, specifying at least one first product from among the included products may include specifying the first product based on a predetermined priority order of improvement requests for the included products.

In the second aspect, the priority order of the predetermined improvement requests may be set such that an included product on an upstream side is higher than an included product on a downstream side in a product tree indicating a relationship between each of the included products included in the target product.

In the second aspect, the priority order of the predetermined improvement requests may be set such that an included product on a downstream side is higher than an included product on an upstream side in a product tree indicating a relationship between each of the included products included in the target product.

In the second aspect, the priority order of the predetermined improvement requests may be set such that an included product that has a large degree of influence on a value of the predetermined traceability item is higher than an included product that has a small degree of influence.

The information processing method according to the second aspect may include receiving a completion notification from a terminal associated with a supplier of the at least one first product indicating that improvement of the predetermined traceability item has been completed for the first product after outputting an improvement request for the predetermined traceability item for the first product, specifying at least one second product required to be improved regarding the predetermined traceability item from among products other than the at least one first product among the included products when a determination is again made that, after the reception of the completion notification, the predetermined target value with respect to the predetermined traceability item has not been achieved, and outputting an improvement request for the predetermined traceability item for the second product.

A third aspect of the invention relates to a system including

a plurality of terminals related to suppliers of a plurality of respective included products included in a target product, and

a server device,

where each of the terminals

transmits product information regarding the included products, the product information including information regarding a predetermined traceability item for the included products, to the server device, and

where the server device

determines whether a predetermined target value regarding the predetermined traceability item has been achieved based on the information regarding the predetermined traceability item in each included product,

specifies at least one first product required to be improved regarding the predetermined traceability item from among the included products when a determination is made that the predetermined target value regarding the predetermined traceability item has not been achieved, and

outputs an improvement request for the predetermined traceability item for the first product.

In the third aspect, outputting an improvement request for the predetermined traceability item for the first product may include transmitting the improvement request to the terminal associated with a supplier of the at least one specified first product of the improvement request.

With each aspect of the present disclosure, it is possible to promote improvement regarding a predetermined traceability item for a target product in which a predetermined target value regarding a predetermined traceability item has not been achieved.

BRIEF DESCRIPTION OF THE DRAWINGS

Features, advantages, and technical and industrial significance of exemplary embodiments of the invention will be described below with reference to the accompanying drawings, in which like signs denote like elements, and wherein:

FIG. 1 is a diagram illustrating an example of a supply chain according to a first embodiment;
FIG. 2 is a diagram illustrating an example of a relationship between products supplied through the supply chain;
FIG. 3 is a diagram illustrating an overview of processing performed between a company terminal and a server device;
FIG. 4 is a hardware configuration diagram of the server device according to the first embodiment;
FIG. 5 is a hardware configuration diagram of the company terminal according to the first embodiment;
FIG. 6 is a software configuration diagram of the server device according to the first embodiment;
FIG. 7 is a software configuration diagram of the company terminal according to the first embodiment;
FIG. 8 is an example of product information generated by a product information generation unit;
FIG. 9 is a diagram illustrating an example of the flow of processing executed by the server device;
FIG. 10 is a diagram illustrating a product tree of a plurality of products constituting a final product and a subject company's CFP for each of the products;
FIG. 11 is an example of a screen outputting the product tree as an image;
FIG. 12 is a diagram illustrating evaluation processing according to the first embodiment;
FIG. 13 is a diagram illustrating improvement request processing according to the first embodiment;
FIG. 14 is a diagram illustrating re-evaluation processing according to the first embodiment;
FIG. 15 is a software configuration diagram of a server device according to a second embodiment; and
FIG. 16 is a diagram illustrating improvement request processing according to the second embodiment.

DETAILED DESCRIPTION OF EMBODIMENTS

In recent years, with respect to specific products such as batteries, there are cases where it is required to ensure traceability such as carbon footprint of products (CFP), recycling rate of specific materials, due diligence, and the like. For example, in Europe, legislation that requires ensuring traceability regarding CFP in batteries is about to be enacted.

In addition, it is assumed that predetermined target values will be set based on regulatory values, or the like for items (hereinafter sometimes referred to as "traceability items") that require ensuring traceability as described above. In order for the target product to achieve the predetermined target value regarding the predetermined traceability item, it is desirable that a plurality of products (hereinafter sometimes referred to as "included products") such as parts and materials included in the target product be obtained so as to contribute to achieving the predetermined target value. In other words, a supplier of each included product is required to carry out each process of production, manufacture, transportation, and the like of the included product so that the target product can achieve a predetermined target value regarding a predetermined traceability item. Therefore, the present disclosure provides a technique for requesting improvement of a predetermined traceability item in an included product when it is determined that the target product has not achieved a predetermined target value regarding the predetermined traceability item.

An information processing device according to a first aspect of the present disclosure includes a control unit. The control unit acquires product information regarding each of a plurality of included products included in the target product. Here, the target product is a product for which a predetermined target value is set for a predetermined traceability item. The product information includes information about a predetermined traceability item in each included product. Such product information may be provided by each included product's supplier.

Further, the control unit determines whether the target product has achieved a predetermined target value regarding the predetermined traceability item based on information about the predetermined traceability item included in the product information of each included product. In this case, the control unit may calculate the value for the traceability item of the target product by integrating information about the predetermined traceability item of each included product.

Then, when it is determined that the target product has not achieved the predetermined target value regarding the predetermined traceability item, the control unit specifies at least one first product from among the plurality of included products. Here, the first product is an included product that is a target of an improvement request of the predetermined traceability item. For example, the control unit may preferentially specify, as the first product, an included product in which a value for the predetermined traceability item included in the product information does not satisfy a reference value determined for each included product. Further, the control unit may preferentially specify, as the first product, an included product in which information about the predetermined traceability item included in the product information is inventory data. Further, the control unit may specify the first product based on a predetermined priority order of improvement requests for the plurality of included products. The control unit then outputs an improvement request for the predetermined traceability item in the first product.

With the present disclosure, when the predetermined target value is not achieved for the predetermined traceability item in the target product, it is possible to urge the supplier of the first product included in the target product to make improvements regarding the predetermined traceability item. As a result, when the supplier of the first product takes measures to improve the value of the predetermined traceability item, the value of the predetermined traceability item of the target product will also be improved accordingly. Therefore, it is possible to promote improvements regarding the predetermined traceability item for the target product. Further, even when the structure of the supply chain related to the target product becomes complicated, the first product as a target of the improvement request can be appropriately selected.

Hereinafter, specific embodiments of the present disclosure will be described based on the drawings. The dimensions, materials, shapes, relative arrangements, and the like of the components described in the present embodiment are not intended to limit the technical scope of the present disclosure, unless otherwise specified.

First Embodiment

The system according to the present embodiment is a system that provides information on products supplied by a supply chain that includes a plurality of companies. Information on products is typically information on traceability.

First, the structure of the supply chain will be described. In one example, at least some companies (intermediate suppliers) included in the supply chain may receive parts from one or more upstream companies, use the received parts to produce their subject products, and deliver the produced products to companies (downstream companies) in the next process. The most upstream companies can directly produce their subject products and deliver the produced products to companies in the next process. Some companies in a supply chain may directly deliver (that is, engage in distribution) products received from other companies to another company. A plurality of companies repeats this process, and in the final process, the final product is obtained.

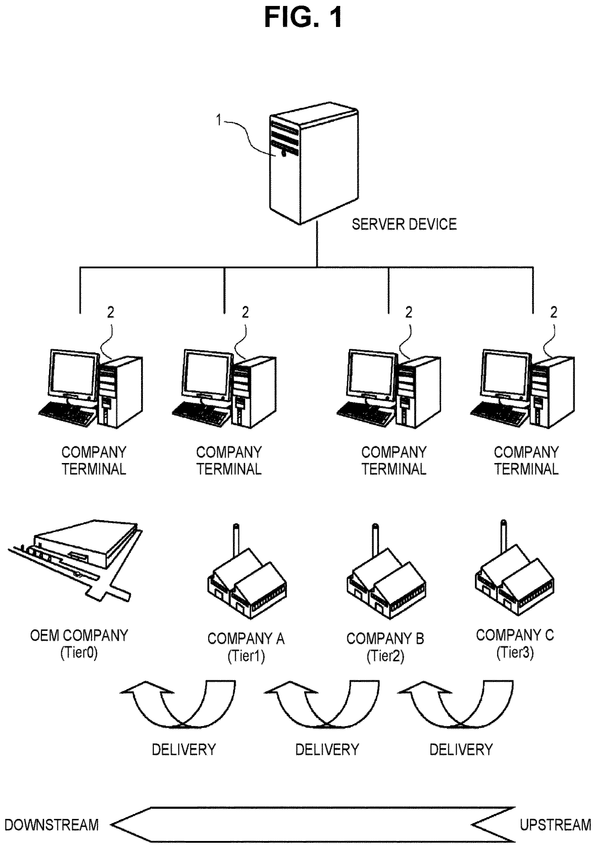

FIG. 1 is a diagram illustrating an example of a supply chain according to the present embodiment. In the example of FIG. 1, it is assumed that a product related to an automobile is obtained. Specifically, the supply chain illustrated in FIG. 1 includes an OEM company and a plurality of companies that are suppliers. An OEM company is a company that assembles a final product, and a plurality of companies (companies A to C) that are suppliers are companies that supply parts, materials, assemblies, or the like for manufacturing the final product. A plurality of companies that are suppliers each produce a plurality of products and deliver the products to a company located one level below. A plurality of companies repeats this process, and the final product is assembled in the final process.

In the present embodiment, the side that delivers products in a certain level is called the upstream side, and the side that purchases the products and produces new products is called the downstream side. In this specification, companies located on the upstream side are referred to as upstream companies, and companies located on the downstream side are referred to as downstream companies. Further, products produced by upstream companies are referred to as upstream products, and products produced by downstream companies are referred to as downstream products. Downstream products include upstream products as parts or materials.

Further, in the present embodiment, a level included in the supply chain is referred to as a tier. Tier0 is the lowest level for assembling a final product (that is, Tier0 corresponds to an OEM company), and as the level progresses through Tiers1, 2, 3, the level moves upstream. Depending on the level of focus, the same company can be considered a downstream company or an upstream company. For example, a company B located in Tier2 is a downstream company in relation to Tier3, but is an upstream company in relation to Tier1. In this way, the definitions of upstream and downstream companies can change depending on the level.

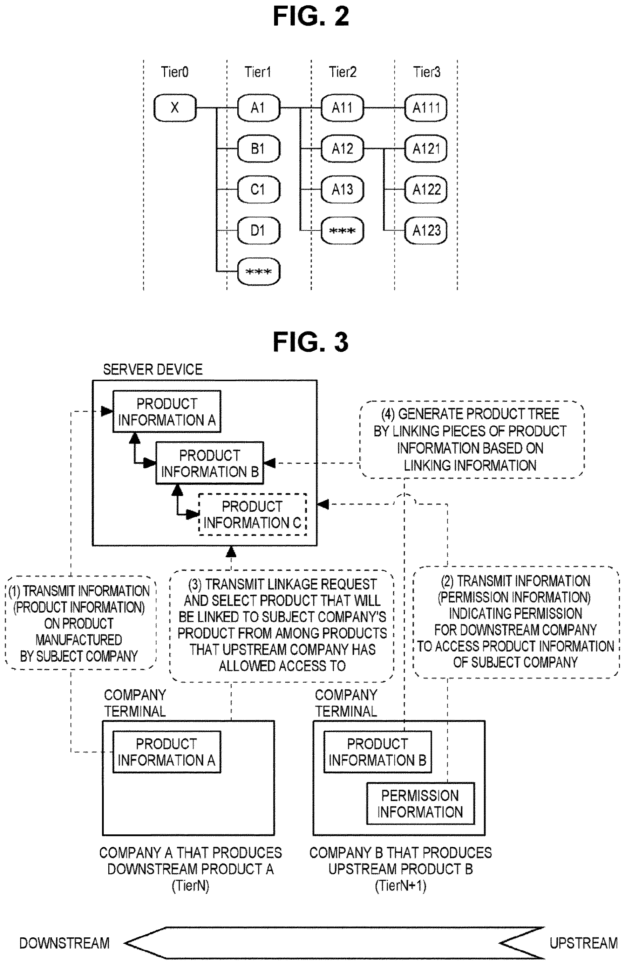

FIG. 2 is a diagram illustrating an example of the relationship between products supplied by the supply chain. Here, the supply relationship of a plurality of products constituting a final product X is represented by a tree diagram. In this example, the final product X is produced by assembling products A1, B1, C1, D1, .... The product A1 is produced by assembling products A11, A12, A13, .... In this way, the relationship between a plurality of products that constitutes the final product can be represented by a tree diagram in which each product is a node. Hereinafter, a tree diagram related to a specific final product will be referred to as a product tree. In one example, the final product X is a battery installed in an electric vehicle (battery electric vehicle: BEV). In another example, the final product X may be an automobile-related product, such as an automobile, an automobile assembly, or the like.

A server device 1 (information processing device) according to the present embodiment collects information (hereinafter referred to as "product information") on products produced by each company and information for linking pieces of product information from a terminal (company terminal 2) corresponding to each company, and then server device 1 generates such a product tree based on these. Further, the product information includes information (hereinafter referred to as "traceability-related information") regarding predetermined traceability items such as carbon footprint of products (CFP). By tracing the product tree in which pieces of product information are linked, predetermined traceability items can be tracked. The traceability-related information may include any information that can be a target for ensuring traceability.

As illustrated in FIG. 1, the information processing system according to an example of the present embodiment includes the server device 1 and a plurality of company terminals 2. The company terminal 2 is a terminal corresponding to each of a plurality of companies that constitutes the supply chain. The server device 1 collects information for generating a product tree from each of the company terminals 2, and generates the product tree based on this information. Further, the server device 1 can execute traceability-related processing (typically, processing for calculating CFP, and the like) based on the generated product tree. Further, the execution results of the processing can be transmitted to the company terminal 2.

Next, an overview of processing by which the server device 1 generates a product tree will be described using FIG. 3. FIG. 3 is a diagram illustrating an overview of processing performed between the company terminal 2 and the server device 1. In the example of FIG. 3, it is assumed that a downstream company, a company A, and an upstream company, a company B, exist in any level. It is assumed that the company B produces a product B and delivers it to the company A, and the company A uses the product B to produce a product A. That is, in the example of FIG. 3, the product B becomes a child node of the product A on the product tree.

In order to generate the product tree, the company terminal 2 corresponding to each company transmits information on a product produced by the company to the server device 1. In this example, the company terminal 2 corresponding to the company A transmits product information (referred to as product information A) on the product A to the server device 1. Similarly, the company terminal 2 corresponding to the company B transmits product information (referred to as product information B) on the product B to the server device 1. Product information of each company is stored in the server device 1.

An operation for linking pieces of product information stored in the server device 1 is performed by the company terminal 2. In one example, a person in charge of a downstream company logs into the server device 1 from the company terminal 2 using an account of the downstream company, and selects an upstream product that is a linking target of the downstream product, which is a subject company's product. In this way, the linkage between the pieces of the product information is performed from the downstream product to the upstream product. The server device 1 links the pieces of the product information based on the selection.

However, when all the products included in the supply chain and information on those products are presented as options when selecting the product as the linking target, the confidentiality of information on companies that constitute the supply chain and information on the products produced by those companies is compromised. Further, it may not be reasonable to expose the entire product tree to one supplier.

Therefore, the server device 1 according to the present embodiment grants an access authority for the product information of the upstream product to the downstream company in advance in response to a request from the upstream company. The server device 1 allows references from the downstream company within the scope of the granted authority.

In an example in FIG. 3, the company terminal 2, which corresponds to the company B, which is the upstream company, transmits a request (information) to the server device 1 instructing to "grant the company A the authority to access the product information B". When the server device 1 receives a linkage request from the company terminal 2 corresponding to the company A, it provides only a list of pieces of product information that the company A has been given the access authority for, and allows the company A to select the product as a linking target. Also, when there is a request to refer to the product tree from the company terminal 2 corresponding to the company A, the server device 1 provides the company terminal 2 with a product tree in which information other than the information that the company A is granted the access authority for is kept confidential. This allows information on unrelated companies and products to be kept confidential.

Here, predetermined target values are set for predetermined traceability items for a final product manufactured by the OEM company. For example, there are cases where it is legally required that the value of a predetermined traceability item of a final product satisfies a predetermined regulation value. In such a case, a predetermined target value is set based on the predetermined regulation value. When evaluating the final product, the server device 1 identifies a plurality of products (included products) such as parts and materials included in the final product based on the product tree. Further, the server device 1 calculates a value for a predetermined traceability item of the final product by integrating traceability-related information included in the product information of each included product.

The server device 1 also evaluates whether the final product has achieved a predetermined target value regarding a predetermined traceability item. Then, when the final product does not achieve a predetermined target value regarding a predetermined traceability item, the server device 1 outputs an improvement request for the predetermined traceability item in the included product. In this case, the server device 1 selects the product that is the target of the improvement request from among a plurality of included products included in the final product. In the following, the included product that is the target of an improvement request may be referred to as a "first product". The value of the predetermined traceability item for the final product is calculated by integrating the values of the predetermined traceability items for the respective included products. Therefore, when the value of the predetermined traceability item is improved for the first product, the value of the predetermined traceability item for the final product is also improved.

Hardware Configuration

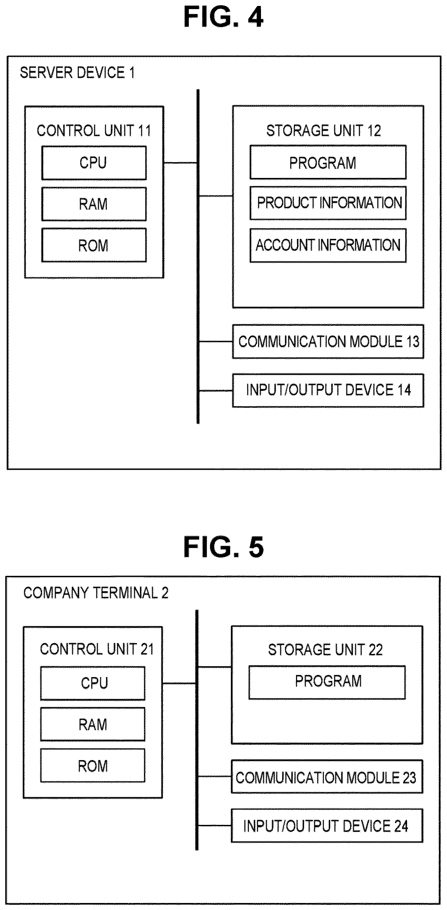

Next, the hardware configuration of each device constituting the system will be described using FIG. 4. FIG. 4 is a diagram schematically illustrating an example of the hardware configuration of the server device 1 according to the present embodiment. The server device 1 is configured as a computer having a control unit 11, a storage unit 12, a communication module 13, and an input/output device 14.

The server device 1 can be configured as a computer having a processor (CPU, GPU, and the like), a main storage device (RAM, ROM, and the like), and an auxiliary storage device (EPROM, hard disk drive, removable media, and the like). The auxiliary storage device stores an operating system (OS), various programs, various tables, and the like, and by executing the programs stored therein, it is possible to realize each function (software module) meeting a predetermined purpose as described below. However, some or all of the modules may be realized as a hardware module by a hardware circuit such as an ASIC or an FPGA.

The control unit 11 is an operation unit that realizes various functions of the server device 1 by executing a predetermined program. The control unit 11 can be realized, for example, by a hardware processor such as a CPU. Further, the control unit 11 may include a RAM, a read only memory (ROM), a cache memory, and the like.

The storage unit 12 is a medium that stores information, and is composed of a storage medium such as a RAM, a magnetic disk, or a flash memory. The storage unit 12 stores a program executed by the control unit 11, data used by the program, and the like. Further, a database is constructed in the storage unit 12, and product information collected from the company terminals 2 and account information on companies are stored in the database. Details thereof will be described below.

The communication module 13 is a communication interface for connecting the server device 1 to a network. The communication module 13 may be configured to include, for example, a network interface board, a wireless communication interface for wireless communication, and the like. The server device 1 can perform data communication with other computers (for example, other server devices 1 or each company terminal 2) via the communication module 13.

The input/output device 14 is a device that receives an input operation performed by an operator and that presents information to the operator. Specifically, the input/output device 14 includes a device for input such as a mouse and a keyboard, and a device for output such as a display and a speaker. The input/output device may be integrally configured with a device that inputs and a device that outputs, such as a touch panel display and the like.

In the specific hardware configuration of the server device 1, components can be omitted, replaced, or added as appropriate depending on the embodiment. For example, the control unit 11 may include a plurality of hardware processors. The hardware processors may be composed of a microprocessor, an FPGA, a GPU, or the like. The input/output device 14 may be omitted, or an input/output device (for example, an optical drive or the like) other than the one exemplified may be added. Further, the server device 1 may be configured by a plurality of computers. In this case, the hardware configurations of the computers may or may not match.

FIG. 5 is a diagram schematically illustrating an example of the hardware configuration of the company terminal 2 according to the present embodiment. The company terminal 2 is configured as a computer having a control unit 21, a storage unit 22, a communication module 23, and an input/output device 24.

Similar to the server device 1, the company terminal 2 can be configured as a computer having a processor (CPU, GPU, or the like), a main storage device (RAM, ROM, or the like), and an auxiliary storage device (EPROM, hard disk drive, removable media, and the like). However, some or all of the functions (software modules) may be realized as a hardware module by, for example, a hardware circuit such as an ASIC or an FPGA.

The control unit 21 is an operation unit that realizes various functions (software modules) of the company terminal 2 by executing a predetermined program. The control unit 11 can be realized, for example, by a hardware processor such as a CPU. Further, the control unit 21 may include a RAM, a read only memory (ROM), a cache memory, and the like.

The storage unit 22 is a medium that stores information, and is composed of a storage medium such as a RAM, a magnetic disk, or a flash memory. The storage unit 22 stores a program executed by the control unit 21, data used by the program, and the like.

The communication module 23 is a communication interface for connecting the company terminal 2 to the network. The communication module 23 may be configured to include, for example, a network interface board, a wireless communication interface for wireless communication, and the like. The company terminal 2 can perform data communication with other computers (for example, the server device 1) via the communication module 23.

The input/output device 24 is a device that receives input operations performed by the operator and for presenting information to the operator. Specifically, the input/output device 24 includes a device for input such as a mouse and a keyboard, and a device for output such as a display and a speaker. The input/output device may be integrally configured with a device that inputs and a device that outputs, such as a touch panel display and the like.

In the specific hardware configuration of the company terminal 2, similar to the server device 1, components can be omitted, replaced, or added as appropriate depending on the embodiment.

Software Configuration

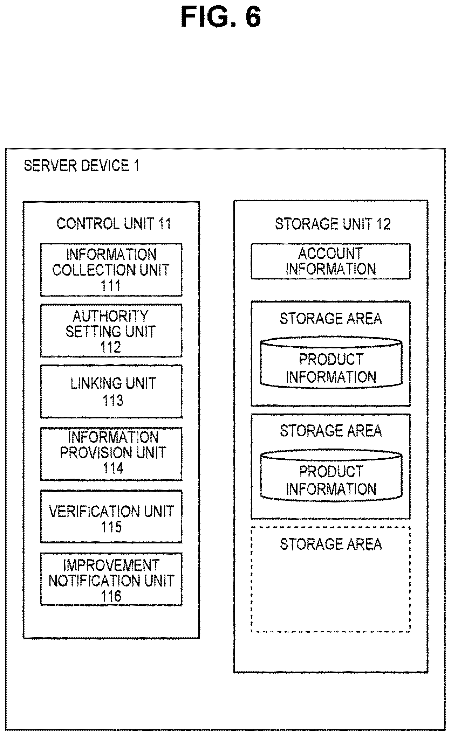

Next, the software configuration of each device constituting the system will be described using FIG. 6. FIG. 6 is a diagram schematically illustrating an example of the software configuration of the server device 1 according to the present embodiment. In the present embodiment, the control unit 11 includes six software modules: an information collection unit 111, an authority setting unit 112, a linking unit 113, an information provision unit 114, an evaluation unit 115, and an improvement notification unit 116. Each software module may be realized by executing a program stored in the storage unit 12 by the control unit 11 (CPU). The information processing executed by the information collection unit 111, authority setting unit 112, linking unit 113, information provision unit 114, the evaluation unit 115, and the improvement notification unit 116 described below is synonymous with the information processing executed by the control unit 11.

The information collection unit 111 is configured to receive product information transmitted from the company terminal 2 and execute a process of storing the product information in the storage unit 12. The authority setting unit 112 is configured to receive information (hereinafter, referred to as permission information) used to set an access authority for product information from the company terminal 2. Further, the authority setting unit 112 is configured to execute processing that sets an access authority for product information stored in the storage unit 12 based on the received information.

The linking unit 113 is configured to acquire information for linking pieces of product information from the company terminal 2 by interacting with the company terminal 2. Further, the linking unit 113 is configured to execute processing that writes information representing a linking relationship to the product information stored in the storage unit 12 based on the acquired information. Further, the linking unit 113 is configured to receive a request to assign terminal information, and in response to the request, execute processing that adds terminal information to the product information stored in the storage unit 12. A product tree is formed by reflecting the linking and terminal assignment. That is, forming the product tree is performed by storing linking information and terminal information in the storage unit 12. The linking unit 113 is configured to generate a product tree according to the results of linking and terminal assignment.

The information provision unit 114 is configured to execute information processing related to the product tree and output the results of the information processing. The information processing related to the product tree may include processing for performing calculations regarding predetermined traceability items on the product tree. Outputting the results of executing the information processing may include processing for providing information on the generated product tree to the company terminal 2. In one example, the information provision unit 114 is configured to generate information on the product tree and output the information on the generated product tree.

In the present embodiment, the storage unit 12 is configured so as to include a plurality of logical storage areas. A different access authority can be set for each of the plurality of storage areas, such as an area where access authority has been granted to the company A, an area where access authority has been granted to the company B, and an area where access privileges are granted to both companies A and B. The authority setting unit 112 sets access authority by storing the product information received from the company terminal 2 in an appropriate storage area. A specific processing method will be described below.

Account information is stored in the storage unit 12. In the present embodiment, the operator of each company logs into the server device 1 via the company terminal 2 using the account of the corresponding company, and thereby the interaction between the server device 1 and the company terminal 2 is performed. Account information is information on accounts corresponding to each company constituting the supply chain. Logging in using an account is an example of accessing the server device 1 as a corresponding company. However, the method of accessing the server device 1 may not be limited to this example, and may be selected as appropriate depending on the embodiment.

Information regarding the product tree of the final product generated by the information provision unit 114 is stored in the storage unit 12. In addition, in the control unit 11, the evaluation unit 115 calculates a value for a predetermined traceability item of the final product based on traceability-related information regarding each of a plurality of included products included in the final product, which is stored in each storage area of the storage unit 12. Further, the evaluation unit 115 determines whether the final product has achieved a predetermined target value regarding a predetermined traceability item based on the calculated numerical value.

In addition, in the control unit 11, when the final product does not achieve a predetermined target value for a predetermined traceability item, the improvement notification unit 116 specifies the first product that is the target of an improvement request from among the a plurality of included products, and outputs an improvement request. The details of the method of evaluating the final product by the evaluation unit 115 and the method of requesting improvement by the improvement notification unit 116 will be described below.

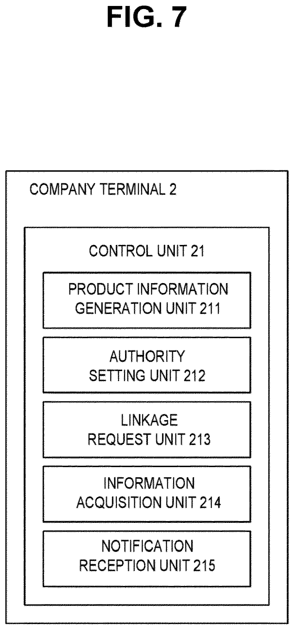

FIG. 7 is a diagram schematically illustrating the software configuration of the company terminal 2 according to the present embodiment. In the present embodiment, the control unit 21 includes five software modules: a product information generation unit 211, an authority setting unit 212, a linkage request unit 213, an information acquisition unit 214, and a notification reception unit 215. Each software module may be realized by executing a program stored in the storage unit 22 by the control unit 21 (CPU). The information processing executed by the product information generation unit 211, authority setting unit 212, linkage request unit 213, information acquisition unit 214, and notification reception unit 215 described below is synonymous with the information processing executed by the control unit 21.

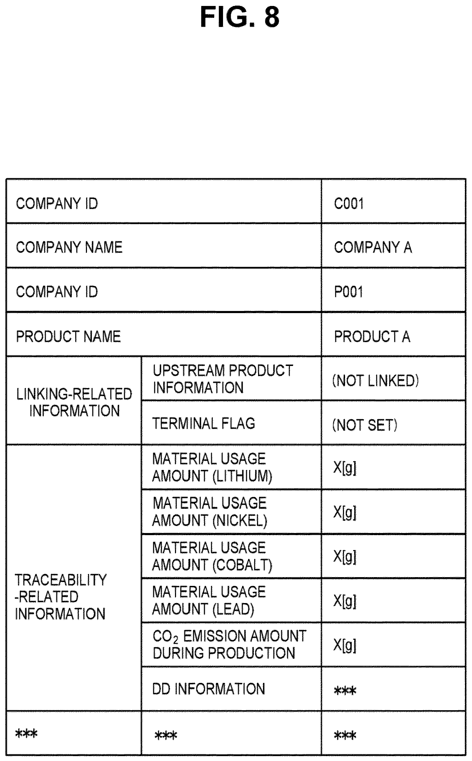

The product information generation unit 211 is configured to generate information (product information) on the product (included product) of the company corresponding to the company terminal 2. FIG. 8 is an example of product information generated by the product information generation unit 211. Product information may be entered via an operator of the device. In the present embodiment, the product information includes fields of company ID, company name, product ID, and product name. The company ID and company name are the identifier and name of the company (that is, the company that uses the company terminal 2) that produces an included product as a target. The product ID and product name are the identifier and name of the included product as a target.

Further, the product information is configured to include linking-related information. The linking-related information is information used to identify the upstream product linked to the included product as a target. In the present embodiment, the linking-related information includes fields of "upstream product information", and "terminal flag".

The upstream product information field is configured to store information used to identify product information corresponding to an upstream product (that is, the product necessary to produce the included product as a target) linked to the included product as a target. The upstream product information field is used when the server device 1 links products. Basically, at the stage when the product information is generated, the included product as a target is not linked to the upstream product, so the upstream product information field does not need to store a value indicating the upstream product.

The terminal flag field is configured to store a flag indicating whether the included product as a target is a leaf node, that is, a node located at the most upstream (terminal) position in the product tree. In the present embodiment, since a plurality of company terminals 2 transmits product information, this flag is used to determine whether a product in the product tree is linked to another product on the upstream side or whether no further linkage occurs (whether the included product as a target is located at the most upstream position?). That is, the terminal flag field is used when the server device 1 determines the linkage between products. Basically, at the stage when product information is generated, the linking relationship of the included product as a target is not determined, so "0", which indicates that currently the included product as a target is not the most upstream, may be stored in the terminal flag field. Finally, to generate the product tree, the product information of each company stored in the server device 1 is set to one of the following states: "Linked with upstream product" or "Terminal flag is set to "1" indicating that the included product as a target is the most upstream product".

Further, the product information is configured to include traceability-related information. In one example, traceability-related information may include a usage amount of materials (for example, upstream products) per production volume of a product, information on the recycling rate of predetermined raw materials, an emission amount ($CO_2$ emission amount during production: hereinafter referred to as "subject company's CFP") of greenhouse gas emitted when producing products in the subject company converted into a carbon dioxide emission amount, due diligence information (DD information), or a combination thereof. The predetermined raw material may be, for example, lithium, nickel, cobalt, lead, graphite, or the like. The recycling rate may be expressed directly or indirectly, such as by a combination of the total usage amount and the usage amount of recycled materials. These values correspond to the process of producing the included product as a target. For example, in the case of the example in FIG. 3, the traceability-related information included in the product information A stores the value (that is, subject company's CFP for product A) obtained by converting the amount of greenhouse gases emitted during the production activities of the product A in the subject company into the emission amount of carbon dioxide. The traceability-related information included in the product information A does not include information (for example, the amount of greenhouse gases emitted until the upstream product B is produced) on the process leading up to the production of upstream products.

The traceability-related information may be selected as appropriate depending on the embodiment. In one example, CFP may include Scope 1, Scope 2, and Scope 3 emission amounts. Scope 1 may be direct greenhouse gas emission amounts. Scope 2 may be indirect emission amounts associated with the use of electricity, heat, and steam supplied by other companies. Scope 3 may be indirect emission amounts other than Scope 1 and Scope 2. Also, in one example, due diligence-related information may be technical documentation that indicates, with respect to a product containing the target raw materials (for example, cobalt, natural graphite, lithium, nickel, and the like), the amount of the raw material contained within the product, and whether the smelter or the like has fulfilled its obligations for responsible mineral procurement. In another example, the due diligence-related information may include a score indicating the degree to which the obligations are met.

The product information generation unit 211 is configured to acquire such information via the operator of the company terminal 2 and transmit it to the server device 1 at an arbitrary timing.

The authority setting unit 212 is configured to designate downstream companies that are permitted to access product information transmitted from the company terminal 2 to the server device 1. The authority setting unit 212 is configured to receive the designation of downstream companies to which access is permitted for any of the subject company's products.

The linkage request unit 213 is configured to request the server device 1 to link the subject company's product information transmitted to the server device 1 with an upstream product. In one example, first, the linkage request unit 213 transmits its subject company ID and product ID to the server device 1, and requests linkage of product information corresponding to the product ID. The server device 1 generates a user interface that includes a list (that is, candidates for a linking target) of product information that the target company is permitted to access, and provides the generated user interface to the company terminal 2.

Next, the linkage request unit 213 is configured to allow the operator to select an upstream product to be linked from the list. Further, the linkage request unit 213 is configured to transmit a pair of the identifier of the product (downstream product) that is the linking source and the identifier of the upstream product that is the linking target to the server device 1. The server device 1 can link pieces of the product information to each other in accordance with this. When there is no upstream product linked to the included product as a target, linking of pieces of product information is not performed.

The information acquisition unit 214 is configured to request the server device 1 to provide a product tree and output the information transmitted from the server device 1.

The notification reception unit 215 is configured to receive the improvement request transmitted from the server device 1 and output the received improvement request when the company terminal 2 is a terminal of a supplier of the first product that is the target of the improvement request. By outputting an improvement request to the company terminal 2 of the supplier of the first product, a notification is sent to the supplier to urge the supplier to improve a predetermined traceability item. In addition, the supplier of the first product can improve the values of predetermined traceability items for the first product by introducing new equipment, changing processes, or the like in each process of production, manufacturing, and transportation of the first product.

Details of Processing for Forming Product Tree

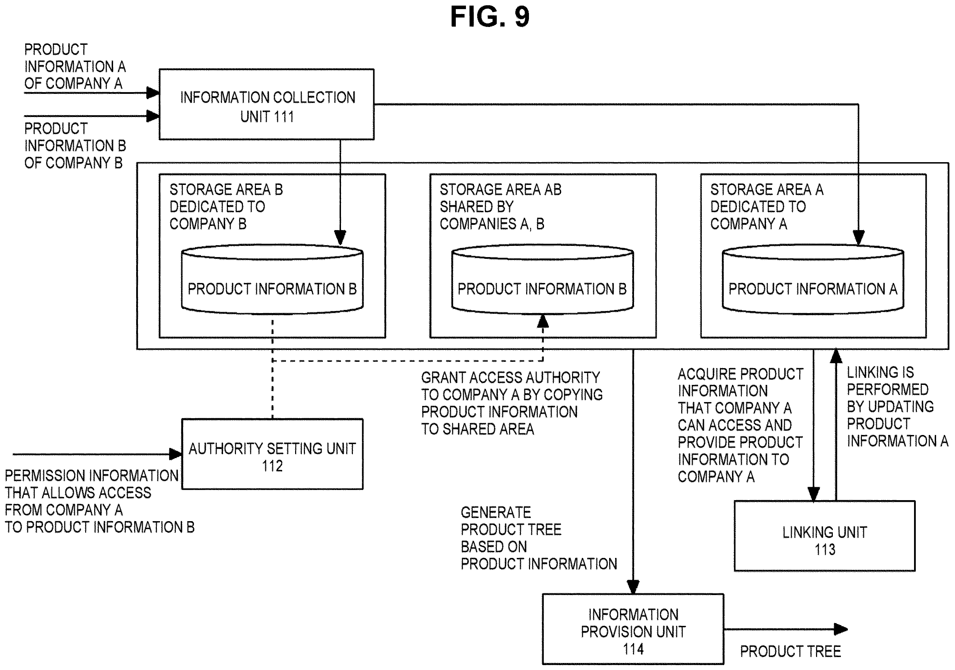

Next, the specific contents of the processing performed by the server device 1 and company terminal 2 will be described. FIG. 9 is a diagram illustrating an example of the flow of processing executed by the server device 1 based on a request from the company terminal 2.

The processing performed by the server device 1 can be roughly divided into the following four phases.

(1) First phase of receiving product information transmitted from company terminal 2 and storing the received product information

(2) Second phase of receiving permission information transmitted from company terminal 2 and setting access authority for product information according to the received permission information

(3) Third phase of linking pieces of product information to each other by interacting with company terminal 2

(4) Fourth phase of providing information on the product tree based on the linking results.

In the example of FIG. 9, the company A is assumed to be a downstream company, and the company B is assumed to be an upstream company. Also, the product produced by the company A is set as a product A, and the product produced by the company B is set as a product B. Further, product information corresponding to the product A is set as product information A, and product information corresponding to the product B is set as product information B.

In the first phase, the information collection unit 111 of the server device 1 acquires product information from the product information generation unit 211 of the company terminal 2. In the example of FIG. 9, the server device 1 acquires product information A from the company terminal 2 corresponding to the company A, and acquires the product information B from the company terminal 2 corresponding to the company B. The information collection unit 111 stores the product information A in a storage area (hereinafter referred to as a storage area A) for which only the company A is granted access authority. Further, the information collection unit 111 stores the product information B in a storage area (hereinafter referred to as a storage area B) for which only the company B is granted access authority. In this way, the information collection unit 111 stores product information transmitted from any company in a dedicated storage area for which only the corresponding company is granted access authority.

In the second phase, the authority setting unit 112 of the server device 1 receives permission information from the authority setting unit 212 of the company terminal 2, and sets access authority for product information according to the received permission information. The permission information associates a product with a company that is permitted to access the product information of the product.

In the example of FIG. 9, it is assumed that the authority setting unit 212 has received permission information to permit access from the company A, which is a downstream company, to the product information B of an upstream company. In this case, the authority setting unit 112 copies the product information B stored in the storage area B to a storage area (hereinafter referred to as a storage area AB) that both the companies A and B are given access authorities for. As a result, the product information B becomes accessible from both the company A and the company B. When access authority is not set for a specific item included in the product information, that item is excluded from being copied to the storage area AB.

In the following description, a storage area for which access authority is only granted to a specific company will be referred to as a "dedicated storage area", and a storage area for which a plurality of companies is granted access authority will be referred to as a "shared storage area".

Copying of product information is executed by the server device 1 in response to receiving permission information from the company terminal 2. That is, by transmitting permission information to the server device 1, the company terminal 2 causes the server device 1 to execute an operation of copying the product information identified by the permission information from the dedicated storage area of the target company to the shared storage area that can be accessed by downstream companies.

In the third phase, the linking unit 113 of the server device 1 receives a linking request from the linkage request unit 213 of the company terminal 2, and links pieces of product information with each other based on the received linking request.

First, the linking unit 113 receives a linking request from the company terminal 2. The linking request is transmitted from the company terminal 2 of the downstream company. In the example of FIG. 9, it is assumed that the company terminal 2 of the company A has transmitted the linking request. The linking request includes the company ID and the product ID of the included product as a target. The linking unit 113 acquires product information stored in a storage area accessible from the company, and generates a list of the acquired pieces of product information. In the example of FIG. 9, the company A can access the product information B stored in the storage area AB. Therefore, in the company terminal 2 of the company A, the product information B can be selected as the linking target.

The linkage request unit 213 of the company terminal 2 presents a list to the operator and allows the operator to select a product to be linked. In this example, the product A and the product B are linked to each other. For example, the operator inputs information indicating that the upstream product of the product A is the product B via the input/output device 24. The linkage request unit 213 transmits data (linking data) used to associate the upstream product (product B) and the downstream product (product A) with each other to the linking unit 113.

As described with reference to FIG. 8, the product information is provided with a field (linking-related information) related to the product that becomes a linking target. The linking unit 113 stores information corresponding to the product information B (that is, upstream product) in the linking-related information included in the product information A, based on the linking data described above. For example, the linking-related information includes an identifier of an upstream product, an identifier of a company that produces the upstream product, and the like.

The linking-related information may include a pointer to product information as a linking target. The pointer indicates an address of product information corresponding to the upstream product. Through the processing described above, a part of a tree structure is formed in which the product information of the downstream product is a parent node and the product information of the upstream product is a child node.

No further linking is performed at the terminal of the product tree. In this case, instead of transmitting linkage data, the linkage request unit 213 transmits data indicating that the product is the terminal of the tree. When the linking unit 113 receives the data, it sets in the terminal flag field of the corresponding product information to be "1". That is, in the third phase, either "processing to set the upstream product as a linking target" or "processing to set the terminal flag" is executed.

In the fourth phase, the information provision unit 114 of the server device 1 generates information on the product tree based on the stored product information and outputs the information on the product tree. Generating information on the product tree can include processing that generates various types of information (for example, information on traceability, an image illustrating the linking relationship between products using a tree diagram, and the like) on a product after links between nodes are formed by linking pieces of the product information together. In order to generate information on the product tree, it is necessary that all pieces of the product information be linked to each other and that the terminal flags of all leaf nodes be set to "1". The information provision unit 114 can appropriately generate the information when such conditions are met.

As described with reference to FIG. 2, the product tree in the present embodiment is a tree diagram representing the supply relationship between pieces of the product information in the supply chain. The information provision unit 114 can generate an image representing a tree diagram based on the product information.

Processing Related to Traceability

Further, the information provision unit 114 refers to traceability-related information included in product information on a plurality of included products linked in the product tree, and executes processing of integrating these pieces of information.

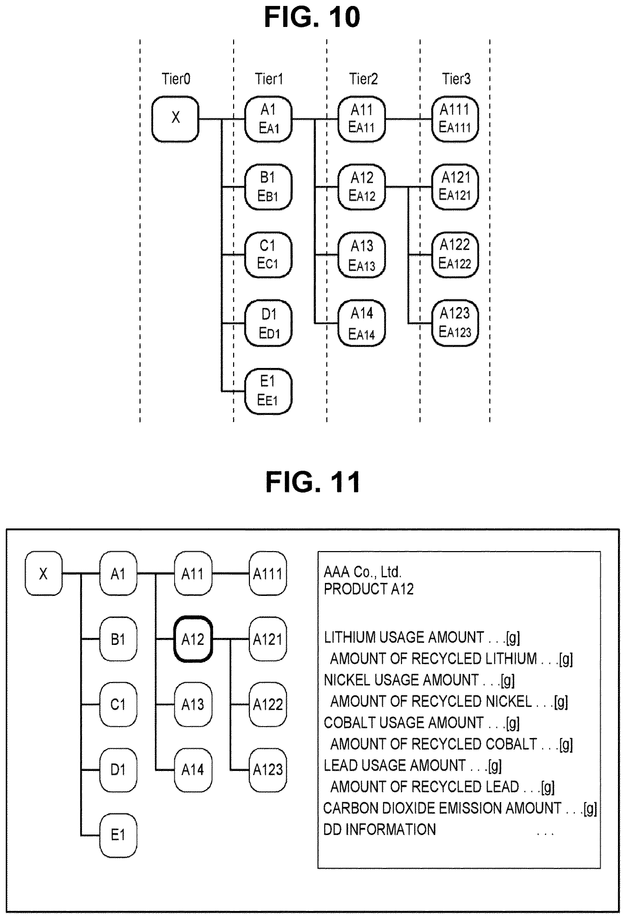

Here, integration of traceability-related information will be described using FIG. 10. FIG. 10 is a diagram illustrating a plurality of products constituting the final product X and the subject company's CFP for each of these products (included products). For example, it is assumed that EA12 [g] of carbon dioxide is emitted in the process of producing a product A12 in the figure. Further, it is assumed that the product is composed of three upstream products A121 to A123. Here, the value (hereinafter referred to as "integrated CFP") obtained by converting the total amount of greenhouse gases emitted until a certain product is produced into the amount of carbon dioxide can be obtained by repeating the processing of passing on the $CO_2$ emission amount associated with upstream products to downstream products between companies in each two adjacent levels, from the most upstream product that is a leaf node to the product.

In the example of FIG. 10, when the product as a target of integration of traceability-related information is A12, by summing the $CO_2$ emission amount corresponding to upstream products A121 to A123 of the product A12 and the $CO_2$ emission amount corresponding to the product A12, the integrated CFP for the product A12 can be calculated. That is, the integrated CFP for the product A12 is as follows.

$$IA12 = EA12 + EA121 \times UA121 + EA122 \times UA122 + EA123 \times UA123 \ [g]$$

Here, it is assumed that IA12 is the integrated CFP for the product A12. It is assumed that EA12 is the company's CFP for the product A12. Further, EA121, EA122, and EA123 are respectively the $CO_2$ emission amount per unit amount (that is, the subject company's CFP per unit amount) when producing the products A121, A122, and A123. Further, UA121, UA122, and UA123 are respectively the usage amounts of products A121, A122, and A123, used in the production of the product A12. This usage amount is an example of the amount of material used per product production amount, which is included in the traceability-related information.

The integrated value may be stored in the storage unit 12 in association with the product, or may be included as part of the product information. That is, the product information corresponding to the product A12 may hold both EA12, which is the emission amount (subject company's CFP) in a single process, and IA12, which is the emission amount (integrated CFP) after integration.

Additionally, when the product as a target of integration of traceability-related information is product A1, by integrating the $CO_2$ emission amount corresponding to the product A1 and the $CO_2$ emission amount corresponding to upstream products A11 to A14 of the product A1, it is possible to calculate the integrated CFP for the product A1. However, the upstream product A11 includes a product A111, which is a further upstream product, and the upstream product A12 includes the products A121 to A123, which are further upstream products. Therefore, when calculating the integrated CFP for the product A1, $CO_2$ during production of the product A111 and the products A121 to A123 is also taken into consideration. That is, the integrated CFP for the product A11 is used as the $CO_2$ emission amount corresponding to the upstream product A11. Also, the integrated CFP for the product A12 is used as the $CO_2$ emission amount corresponding to the upstream product A12. The total amount (that is, the integrated CFP for the final product) of $CO_2$ emission amounts for the final product (the product of the most downstream company) can be obtained by sequentially executing the above calculation from the product of the most upstream company to the final product.

As described above, traceability-related information (for example, integrated CFP for upstream products) after integration is used again when executing integration for downstream products. By executing this processing at each level starting from the most upstream level, traceability-related information is successively passed on downstream. Finally, the traceability-related information is passed on to the final product, so that traceability-related information corresponding to the entire period until the final product is produced can be obtained.

In this way, when generating information on the product tree, the information provision unit 114 may repeatedly execute a process of sequentially integrating traceability-related information defined in each piece of product information from the most upstream to the most downstream. In the example, carbon dioxide emission amounts were exemplified as a target of integration, but the traceability-related information that is a target of integration may also be a recycling rate regarding a predetermined raw material, a score regarding due diligence, or the like. In addition, when the traceability-related information is numerical values, the integration may be performed by numerical calculations, or when the traceability-related information is information (for example, due diligence-related information and the like) other than numerical values, the integration may be simply information collection.

In another example, the product information may include information (hereinafter referred to as "location information"; typically, an address, a pointer, and the like) indicating the location of traceability-related information of the corresponding product. In this case, traceability-related information may not be included in the product information. Integration may also include collecting location information included in product information.

The information provision unit 114 may output the generated product tree in an image format. Further, at the same time, traceability-related information corresponding to any product may be output.

FIG. 11 is an example of a screen outputting a product tree as an image. The illustrated screen includes an image illustrating the supply relationship of a plurality of products constituting the final product using a tree diagram. Further, by selecting any product, it is possible to view traceability-related information corresponding to the product or integrated results (for example, integrated CFP: carbon dioxide emission amount) of traceability-related information corresponding to the entire period until the product is produced. FIG. 11 illustrates an image display of the integrated result of traceability-related information when the product A12 is selected. Such information can be outputted via the input/output device 14 of the server device 1 based on the operation of the operator of the server device 1.

Further, the information provision unit 114 may provide the generated product tree to the company terminal 2 in response to a request from the company terminal 2 (information acquisition unit 214). It may not be appropriate to disclose the entire product tree to a specific company. Therefore, when the information provision unit 114 provides a product tree to the company terminal 2 corresponding to a certain company, the information provision unit 114 may perform a processing of not disclosing a range to which the company does not have access authority. The information provision unit 114 also stores information on the generated product tree in the storage unit 12.

Evaluation Processing

As described above, in the present embodiment, for the final product X, predetermined target values to be achieved are set for predetermined traceability items. The predetermined target value is, for example, a target value for CFP (integrated CFP), a recycling rate of a predetermined raw material, or a score of due diligence-related information. In the server device 1, the evaluation unit 115 executes processing (hereinafter, this may also be referred to as "evaluation processing") to evaluate whether the final product has achieved a predetermined target value regarding a predetermined traceability item.

In the evaluation processing, the evaluation unit 115 specifies a plurality of included products included in the final product X by tracing the product tree corresponding to the final product X stored in the storage unit 12. Further, the evaluation unit 115 calculates a value regarding the predetermined traceability item of the final product X by integrating the values regarding the predetermined traceability item in the traceability-related information on each included product stored in the storage unit 12. The method of integrating the values regarding the predetermined traceability item of each included product in this case is the same as the method described in the processing of integrating traceability-related information described above. Then, the evaluation unit 115 determines whether the value of the final product X regarding a predetermined traceability item has reached a predetermined target value.

Further, when the evaluation unit 115 determines that the value of a predetermined traceability item of the final product X has not reached a predetermined target value, the improvement notification unit 116 executes improvement request processing. The improvement request processing is processing that specifies a first product that is the target of an improvement request for a predetermined traceability item, and requests the supplier of the first product to make improvements.

In the improvement request processing, the improvement notification unit 116 sets a reference value of a predetermined traceability item for each included product according to a predetermined target value regarding a predetermined traceability item set for the final product X. In this case, the reference value for each included product is set as a value that allows the final product X to achieve a predetermined target value for the predetermined traceability item when the value of the predetermined traceability item in each included product satisfies the reference value. The reference value may be set as a different value for each type of included product or for each tier to which the supplier of the included product belongs. Further, the reference value may be set as a uniform value for all included products.

Further, the improvement notification unit 116 calculates a degree of achievement of the value of a predetermined traceability item for each included product with respect to the reference value. Further, the improvement notification unit 116 specifies at least one first product from among a plurality of included products based on the degree of achievement of the value of the predetermined traceability item with respect to the reference value. In this case, the improvement notification unit 116 preferentially specifies, as the first product, the included product of which the value of the predetermined traceability item in the traceability-related information does not satisfy the reference value defined for each included product. Then, the improvement notification unit 116 notifies the account of the specified at least one first product supplier of a request for improvement of the predetermined traceability item in the first product.

Processing Flow

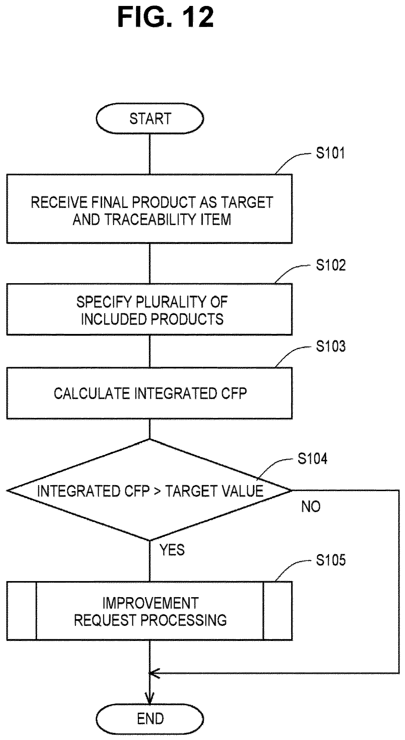

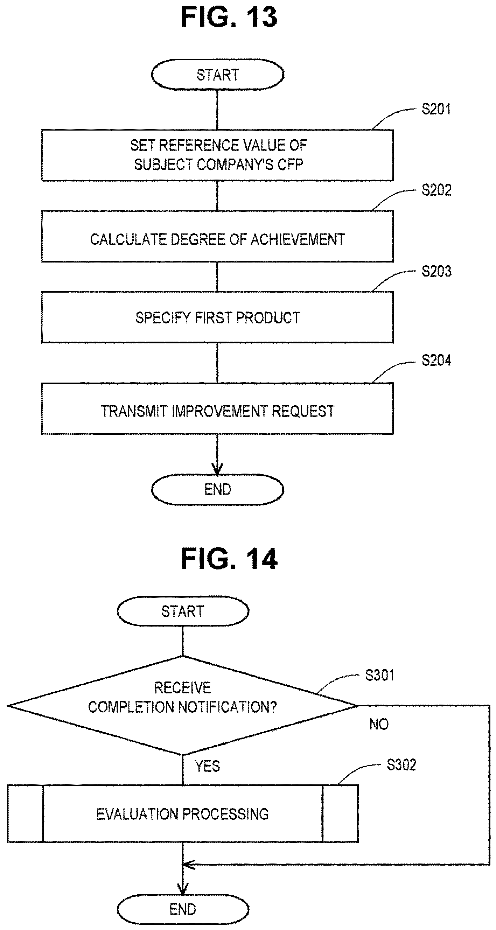

The flow of evaluation processing and improvement request processing executed by the server device 1 in the present embodiment will be described below with reference to FIGS. 12 and 13. FIGS. 12 and 13 illustrate processing when a target value for integrated CFP is set for the final product X. FIG. 12 is a diagram illustrating the evaluation processing. The processing illustrated in FIG. 12 may be automatically executed by the server device 1. Further, the processing illustrated in FIG. 12 may be executed by an operator of the OEM company logging into the server device 1 using subject company's account and instructing the execution of the process. Further, FIG. 13 is a diagram illustrating improvement request processing.

In the evaluation processing illustrated in FIG. 12, first, in S101, the evaluation unit 115 receives information indicating the final product X as an evaluation target and the traceability item. Next, in S102, the evaluation unit 115 specifies a plurality of included products included in the final product X by tracing the information on the product tree corresponding to the final product X stored in the storage unit 12.

Next, in S103, the evaluation unit 115 accesses traceability-related information regarding the plurality of included products specified in S102, and extracts information on CFP. Then, the evaluation unit 115 calculates the integrated CFP of the final product X based on the extracted information on the CFP of each included product. Next, the evaluation unit 115 determines whether the integrated CFP of the final product X calculated in S103 exceeds a predetermined target value. When a negative determination is made in S104, the execution of this flow is ended. On the other hand, when an affirmative determination is made in S 104, then in S105, the improvement request processing illustrated in FIG. 13 is executed.

In the improvement request processing illustrated in FIG. 13, first, in S201, the improvement notification unit 116 sets the reference value of the subject company's CFP for each included product according to the target value of the integrated CFP for the final product X. The $CO_2$ emission amount during the production of the included product may vary depending on the type of included product. Therefore, the reference value of the subject company's CFP may be set to a larger value for an included product that is likely to emit more $CO_2$ during production.

Next, in S202, the improvement notification unit 116 calculates the degree of achievement of the subject company's CFP of each included product stored in each storage area of the storage unit 12 with respect to the reference value of the subject company's CFP set in S201. Next, in S203, the improvement notification unit 116 specifies at least one first product based on the degree of achievement of each included product with respect to the reference value of the subject company's CFP calculated in S202. In this case, the improvement notification unit 116 preferentially specifies the included product of which the subject company's CFP does not satisfy the reference value as the first product. Next, in S204, the improvement notification unit 116 transmits an improvement request to the company terminal 2 of the supplier of each first product specified in S203. The improvement request in this case is information that requests improvement of the subject company's CFP regarding the first product. The improvement notification unit 116 does not necessarily need to transmit the improvement request to the company terminal 2 of the supplier of the first product. For example, the improvement notification unit 116 may output an improvement request to the supplier's account so that the improvement request is displayed on the company terminal 2 of the supplier of the first product.

With the processing illustrated in FIGS. 12 and 13 as described above, when a predetermined target value is not achieved for CFP (integrated CFP) in the final product X, the supplier of the first product included in the target product can be urged to improve the subject company's CFP. As a result, when the supplier of the first product implements measures to improve the subject company's CFP, the integrated CFP of the final product X will also be improved accordingly. Therefore, it is possible to promote improvement of the integrated CFP for the final product X. Moreover, even when the structure of the supply chain related to the final product X becomes complicated, the first product as a target of the improvement request can be appropriately selected.

Further, in the present embodiment, even when the predetermined traceability item as an evaluation target is the recycling rate of a predetermined raw material, by the server device 1 executing the same processing as described above, it is possible to urge the supplier of the first product to improve the recycling rate of a predetermined raw material. In addition, in the present embodiment, even when the predetermined traceability item as an evaluation target is the score of due diligence-related information, by the server device 1 executing the same processing as described above, it is possible to urge the supplier of the first product to improve the score of due diligence-related information.

Re-evaluation Processing

As described above, in the present embodiment, when it is determined that the final product X has not achieved the predetermined target value regarding the predetermined traceability item, the server device 1 requests the supplier of the first product to improve a predetermined traceability item regarding the first product. As a result, when the value of the predetermined traceability item for the first product is improved, the value of the predetermined traceability item for the final product X is also improved. However, even when the value of the predetermined traceability item for the first product specified in the improvement request processing is improved, the value of the predetermined traceability item for the final product X may still not reach the predetermined target value.

Therefore, in the present embodiment, processing (hereinafter sometimes referred to as "re-evaluation processing") for re-evaluation of the final product X is executed. In the re-evaluation processing, even after the value of the predetermined traceability item for the first product has been improved, if the value of the predetermined traceability item for the final product X still does not reach the predetermined target value, the control unit 11 specifies at least one second product. Here, the second product is a product as an improvement target of a predetermined traceability item. The control unit 11 specifies at least one second product from among a plurality of included products included in the final product X, other than the first product. Then, the control unit 11 requests the supplier of the second product to improve predetermined traceability items regarding the second product.

Processing Flow

The flow of the re-evaluation processing executed by the server device 1 will be described below with reference to FIG. 14. FIG. 14 is a diagram illustrating the re-evaluation processing. Here, when the supplier of the first product completes improvements regarding the predetermined traceability item for the first product, it transmits a completion notification to the server device 1 from its company terminal 2.

Therefore, in the evaluation processing illustrated in FIG. 14, first, in S301, after the execution of the improvement request processing illustrated in FIG. 13 is completed, the control unit 11 determines whether a completion notification has been received from the company terminal of the supplier of the first product. When a negative determination is made in S301, the execution of this flow is ended. On the other hand, when an affirmative determination is made in S301, then in S302, the control unit 11 executes the evaluation processing again. Here, new traceability-related information regarding the first product may be transmitted from the company terminal of the supplier of the first product to the server device 1 together with the completion notification, and stored in the storage area of the storage unit 12. Then, the evaluation processing to be executed again may be executed by referring to the traceability-related information updated in the storage unit 12.

Here, when the improvement request processing is executed in the evaluation processing that is executed again, the improvement notification unit 116 specifies at least one second product from among the plurality of included products included in the final product X, other than the first product, as a target of an improvement request for a predetermined traceability item. In this case, for example, in step S203 of the processing illustrated in FIG. 13, the improvement notification unit 116 specifies at least one second product based on the degree of achievement of each included product other than the first product with respect to the reference value of the subject company's CFP. Further, in S204 of the processing illustrated in FIG. 13, the improvement notification unit 116 transmits an improvement request to the company terminal 2 of the supplier of each second product.

With the processing illustrated in FIG. 14 as described above, it is possible to urge the supplier of the second product included in the target product to make improvements regarding the predetermined traceability item. As a result, when the supplier of the second product takes measures to improve the predetermined traceability item, the value of the predetermined traceability item for the final product X will be further improved accordingly. Therefore, it is possible to further promote the improvement of the predetermined traceability item for the final product X.

Second Embodiment

The configuration of the system according to the present embodiment is similar to the system according to the first embodiment. Also in the present embodiment, the server device 1 and each company terminal 2 execute the same processing as the processing according to the first embodiment, thereby generating information on the product tree for the final product X. Additionally, information on the generated product tree is stored in the storage unit 12 of the server device 1. Also in the present embodiment, the server device 1 executes an evaluation processing to evaluate whether the final product has achieved a predetermined target value regarding a predetermined traceability item. However, in the improvement request processing, the method of specifying the first product as the target of an improvement request for a predetermined traceability item is different from the first embodiment.

In the present embodiment, inventory data may be input into traceability-related information included in product information regarding each included product. Here, it is preferable that actual measurement data be used as the traceability-related information included in the product information. The actual measurement data is data calculated based on data actually measured when the included product is produced or the like by a company that is a supplier of the included product. However, depending on the company, it may be difficult to actually measure data regarding the traceability item due to a lack of equipment at sites where the included products are produced or the like. In such a case, inventory data is input into the traceability-related information field in the product information. The inventory data is data predetermined as a typical value for each traceability item.

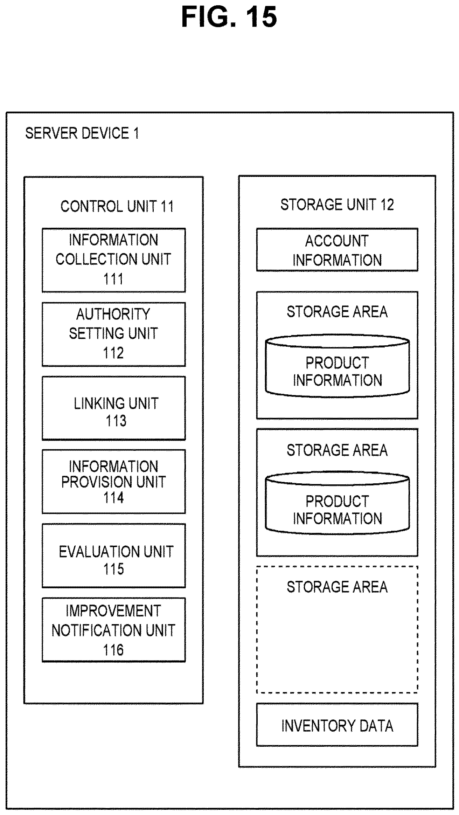

In the present embodiment, inventory data for each traceability item is stored in the server device 1. FIG. 15 is a diagram schematically illustrating an example of the software configuration of the server device 1 according to the present embodiment. Also in the present embodiment, the server device 1 has the control unit 11 and the storage unit 12. In the present embodiment, a database that stores inventory data is constructed in the storage unit 12. In this inventory data database, inventory data for each traceability item is stored for each type or tier of included products. By accessing the server device 1 via the company terminal 2, an operator of each company can acquire inventory data regarding a desired traceability item from the database.

Then, when the inventory data acquired from the server device 1 is input into the traceability-related information field of the product information, information indicating that the information about the traceability item as an input target is inventory data is also input into the product information. For example, when it is difficult for a company that is a supplier of a certain included product to actually measure its subject company's CFP, the operator of the company acquires inventory data of the subject company's CFP corresponding to the included product produced by the subject company from the server device 1. Then, the acquired inventory data of the subject company's CFP is input into the traceability-related information field of the product information regarding the included products produced by the subject company. In this case, information indicating that the information about the subject company's CFP in the traceability-related information is inventory data is also input into the product information. This makes it possible to distinguish whether information about each traceability item in product information is inventory data or actual measurement data.

The inventory data for each traceability item does not necessarily have to be held in the server device 1. For example, inventory data may be held in a device that can be accessed by a company terminal 2 of each company and is different from the server device 1. Inventory data may also be held in the company terminal 2 of each company.

Here, even when it is difficult for a company that is a supplier of an included product to actually measure data regarding a predetermined traceability item due to a lack of equipment, or the like, if this factor is improved by introducing new equipment, or the like, it will be possible to actually measure the data. Then, a company that has become able to actually measure data regarding the predetermined traceability item can change the information regarding the predetermined traceability item input into the product information regarding the included product from inventory data to actually measured data.

Improvement Request Processing

When inventory data is changed to actually measured data, the value of a predetermined traceability item tends to improve. Therefore, in the present embodiment, in the improvement request processing, the improvement notification unit 116 preferentially specifies, as the first product, an included product in which information about a predetermined traceability item included in the product information is the inventory data.

Processing Flow

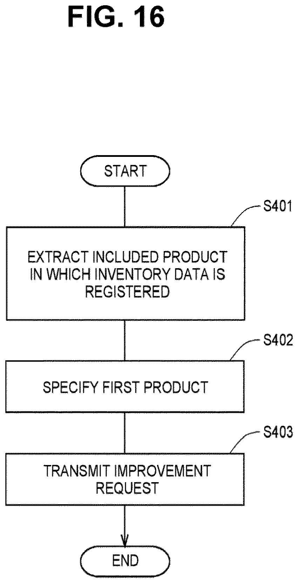

The flow of the improvement request processing executed by the server device 1 in the present embodiment will be described below with reference to FIG. 16. FIG. 16 illustrates processing when a target value for the integrated CFP is set for the final product X.

In the improvement request processing illustrated in FIG. 16, first, in S401, the improvement notification unit 116 extracts the included products in which inventory data is registered as information about the subject company's CFP of each included product stored in each storage area of the storage unit 12. Next, in S402, the improvement notification unit 116 specifies at least one first product from among the included products extracted in S401. Next, in S403, the improvement notification unit 116 transmits an improvement request to the company terminal 2 of the supplier of each first product specified in S402. The processing in S403 is similar to the processing in S204 in the flow illustrated in FIG. 13.

With the processing illustrated in FIG. 16 as described above, when the predetermined target value regarding CFP (integrated CFP) is not achieved in the final product X, an improvement request can be notified to the supplier of the first product in which the inventory data is registered as the information on the subject company's CFP. Thereby, it is possible to urge the supplier of the first product to change the inventory data to the actual measurement data. As a result, when the supplier of the first product takes measures to change the information on the subject company's CFP from inventory data to actual measurement data, the integrated CFP of the final product X will be improved accordingly. Therefore, it is possible to promote improvement of the integrated CFP for the final product X.

Further, in the present embodiment, even when the predetermined traceability item as an evaluation target is the recycling rate of a predetermined raw material or the score of due diligence-related information, the server device 1 can execute the same improvement request processing as described above. Therefore, it is possible to urge the supplier of the first product to change information on the recycling rate of a predetermined raw material from inventory data to actual measurement data. Also, it is possible to urge the supplier of the first product to change the information on the score of due diligence-related information from inventory data to actual measurement data.

First Modification Example

In the improvement request processing, the method that specifies the first product as a target of an improvement request for a predetermined traceability item is not limited to the methods of the first and second embodiments. For example, in the improvement request processing, the improvement notification unit 116 may specify the first product based on a predetermined priority order of improvement requests for a plurality of included products.

Here, the priority order of the improvement request may be set such that in the product tree of the plurality of included products included in the final product X, the included products on the upstream side are higher than the included products on the downstream side. In this case, the improvement notification unit 116 can specify the first product based on the predetermined priority order of the improvement request by referring to the information on the product tree.

Further, the priority order of the improvement request may be set such that in the product tree of the plurality of included products included in the final product X, the included product on the downstream side is higher than the included product on the upstream side. In this case as well, the improvement notification unit 116 can specify the first product based on the predetermined priority order of the improvement request by referring to the information on the product tree.

Further, the priority order of the improvement request may be set such that included products that have a large influence on the value of a predetermined traceability item in the final product X are higher than included products that have a small influence. In this case, the degree of influence of each included product may be determined in advance according to the traceability item as an evaluation target. For each traceability item, the priority order of the improvement request for a plurality of included products may be determined in advance according to the degree of influence of each included product.

Second Modification Example

In the improvement request processing in each of the embodiments, the improvement notification unit 116 does not necessarily need to notify the account of a supplier of the specified at least one first product of a request for improvement of a predetermined traceability item in the first product. For example, the improvement notification unit 116 may notify the account of the final product X of a request for improvement of a predetermined traceability item in the first product. In this case, it becomes possible for the OEM company to notify the supplier of the first product of an improvement request.

Third Modification Example

In each of the embodiments described above, the method of holding information (linking information of each company including the terminal flag) regarding the product tree may be arbitrarily changed. In another example, a storage area shared by all companies may be provided in the server device 1 (storage unit 12), and the linking information of each company may be held in the storage area shared by all the companies. In yet another example, each company's dedicated storage area may include a non-encrypted area, and each company's linking information may be stored in the non-encrypted area of each company's dedicated storage area. Alternatively, the linking information of each company may be held in an encrypted area of a dedicated storage area of each company. As long as the linking relationships of the product tree can be traced on the system, the configuration and storage form of the linking information may not be particularly limited, and may be selected as appropriate depending on the embodiment. Information regarding the product tree may be held all at once, or may be held separately, for example, by being included in the product information of each company. When product information of each company is held in the company terminal 2 of each company, linking information of each company may be held in the company terminal 2 of each company.

Fourth Modification Example

In each of the embodiments, access restrictions for each company are realized by providing a dedicated storage area and a shared storage area. However, the method of implementing access restrictions may not be limited to this example, and may be implemented using any arbitrary method.

Fifth Modification Example

In each of the embodiments, each company's storage area may be configured using any database technology. In one example, each company's storage area may be configured on a blockchain basis. In this case, at least a part of the information processing regarding the provision of incentives may be executed by a smart contract.

Other Embodiments

The embodiments described above are merely examples, and the present disclosure may be implemented with appropriate changes within the scope of the gist thereof. Further, the processing and means described in the present disclosure can be implemented in any combination as long as no technical contradiction occurs.
Further, the processing described as being performed by one device may be shared and executed by a plurality of devices. Alternatively, the processing described as being performed by different devices may be performed by one device. In a computer system, the hardware configuration (server configuration) that implements each function can be flexibly changed.
The present disclosure can also be realized by supplying a computer program implementing the functions described in the above-described embodiments to a computer, and having one or more processors included in the computer read and execute the program. Such a computer program may be provided to the computer by a non-temporary computer-readable storage medium connectable to a system bus of the computer, or may be provided to the computer via a network. The non-temporary computer-readable storage medium includes, for example, any type of disk, such as a magnetic disk (floppy (registered trademark) disk, hard disk drive (HDD), and the like), and an optical disks (CD-ROM, DVD disk, Blu-ray disk, and the like), and any type of medium suitable for storing an electronic instruction, such as a read-only memory (ROM), a random access memory (RAM), an EPROM, an EEPROM, a magnetic card, a flash memory, or an optical card.

**Claims**

1. An information processing device (1) comprising:

   a control unit (11), wherein
   the control unit (11) is configured to:

      acquire product information regarding each of a plurality of included products included in a target product, the product information including information regarding a predetermined traceability item for a corresponding one of the included products;
      determine whether a predetermined target value regarding the predetermined traceability item has been achieved based on the information regarding the predetermined traceability item included in the acquired product information;
      specify at least one first product required to be improved regarding the predetermined traceability item from among the included products when the control unit (11) determines that the predetermined target value regarding the predetermined traceability item has not been achieved; and
      output an improvement request for the predetermined traceability item for the first product.

2. The information processing device (1) according to claim 1, wherein outputting the improvement request for the predetermined traceability item for the first product includes notifying an account of a supplier of the at least one specified first product of the improvement request.

3. The information processing device (1) according to claim 1, wherein specifying the at least one first product from among the included products includes preferentially specifying, as the first product, an included product in which a value of the predetermined traceability item included in the product information does not satisfy a reference value determined for each included product.

4. The information processing device (1) according to claim 1,

   wherein the product information of each included product includes information indicating whether information regarding the predetermined traceability item is inventory data or actual measurement data, and
   wherein specifying the at least one first product from among the included products includes preferentially specifying, as the first product, an included product in which information regarding the predetermined traceability item included in the product information is inventory data.

5. The information processing device (1) according to claim 1, wherein specifying the at least one first product from among the included products includes specifying the first product based on a predetermined priority order of improvement requests for the included products.

6. The information processing device (1) according to claim 5, wherein the priority order of the predetermined improvement requests is set such that an included product on an upstream side is higher than an included product on a downstream side in a product tree indicating a relationship between each of the included products included in the target product.

7. The information processing device (1) according to claim 5, wherein the priority order of the predetermined improvement requests is set such that an included product on a downstream side is higher than an included product on an upstream side in a product tree indicating a relationship between each of the included products included in the target product.

8. The information processing device (1) according to claim 5, wherein the priority order of the predetermined improvement requests is set such that an included product that has a large degree of influence on a value of the predetermined traceability item is higher than an included product that has a small degree of influence.

9. The information processing device (1) according to any one of claims 1 to 8, wherein the control unit (11) is further configured to:

receive a completion notification from a terminal (2) associated with a supplier of the at least one first product indicating that improvement of the predetermined traceability item has been completed for the first product after outputting an improvement request for the predetermined traceability item for the first product;
specify at least one second product required to be improved regarding the predetermined traceability item from among products other than the at least one first product among the included products when the control unit (11) again determines that the predetermined target value regarding the predetermined traceability item has not been achieved after receiving the completion notification; and
output an improvement request for the predetermined traceability item for the second product.

10. An information processing method comprising:

acquiring product information regarding each of a plurality of included products included in a target product, the product information including information regarding a predetermined traceability item for a corresponding one of the included products;
determining whether a predetermined target value regarding the predetermined traceability item has been achieved based on the information regarding the predetermined traceability item included in the acquired product information;
specifying at least one first product required to be improved regarding the predetermined traceability item from among the included products when a determination is made that the predetermined target value regarding the predetermined traceability item has not been achieved; and
outputting an improvement request for the predetermined traceability item for the first product.

11. The information processing method according to claim 10, wherein outputting the improvement request for the predetermined traceability item for the first product includes notifying an account of a supplier of the at least one specified first product of the improvement request.

12. The information processing method according to claim 10, wherein specifying the at least one first product from among the included products includes preferentially specifying, as the first product, an included product in which a value of the predetermined traceability item included in the product information does not satisfy a reference value determined for each included product.

13. The information processing method according to claim 10,

wherein the product information of each included product includes information indicating whether information regarding the predetermined traceability item is inventory data or actual measurement data, and
wherein specifying the at least one first product from among the included products includes preferentially specifying, as the first product, an included product in which information regarding the predetermined traceability item included in the product information is inventory data.

14. The information processing method according to claim 10, wherein specifying the at least one first product from among the included products includes specifying the first product based on a predetermined priority order of improvement requests for the included products.

15. An information processing system comprising:

a plurality of terminals (2) related to suppliers of a plurality of respective included products included in a target product; and
a server device (1),
wherein each of the terminals (2) is configured to:
transmit product information regarding the included products, the product information including information regarding a predetermined traceability item for the included products, to the server device (1), and
wherein the server device (1) is configured to:

determine whether a predetermined target value regarding the predetermined traceability item has been achieved based on the information regarding the predetermined traceability item in each included product;
specify at least one first product required to be improved regarding the predetermined traceability item from among the included products when it is determined that the predetermined target value regarding the predetermined traceability item has not been achieved; and
output an improvement request for the predetermined traceability item for the first product.

# FIG. 1

SERVER DEVICE

1

2 COMPANY TERMINAL

2 COMPANY TERMINAL

2 COMPANY TERMINAL

2 COMPANY TERMINAL

OEM COMPANY (Tier0)

COMPANY A (Tier1)

COMPANY B (Tier2)

COMPANY C (Tier3)

DELIVERY        DELIVERY        DELIVERY

DOWNSTREAM                                    UPSTREAM

# FIG. 2

| Tier0 | Tier1 | Tier2 | Tier3 |
|---|---|---|---|

X — A1 — A11 — A111

B1 — A12 — A121

C1 — A13 — A122

D1 — *** — A123

***

# FIG. 3

SERVER DEVICE

PRODUCT INFORMATION A

PRODUCT INFORMATION B

PRODUCT INFORMATION C

(4) GENERATE PRODUCT TREE BY LINKING PIECES OF PRODUCT INFORMATION BASED ON LINKING INFORMATION

(1) TRANSMIT INFORMATION (PRODUCT INFORMATION) ON PRODUCT MANUFACTURED BY SUBJECT COMPANY

(3) TRANSMIT LINKAGE REQUEST AND SELECT PRODUCT THAT WILL BE LINKED TO SUBJECT COMPANY'S PRODUCT FROM AMONG PRODUCTS THAT UPSTREAM COMPANY HAS ALLOWED ACCESS TO

(2) TRANSMIT INFORMATION (PERMISSION INFORMATION) INDICATING PERMISSION FOR DOWNSTREAM COMPANY TO ACCESS PRODUCT INFORMATION OF SUBJECT COMPANY

COMPANY TERMINAL

PRODUCT INFORMATION A

COMPANY TERMINAL

PRODUCT INFORMATION B

PERMISSION INFORMATION

COMPANY A THAT PRODUCES DOWNSTREAM PRODUCT A (TierN)

COMPANY B THAT PRODUCES UPSTREAM PRODUCT B (TierN+1)

DOWNSTREAM ← → UPSTREAM

22

# FIG. 4

SERVER DEVICE 1

CONTROL UNIT 11
- CPU
- RAM
- ROM

STORAGE UNIT 12
- PROGRAM
- PRODUCT INFORMATION
- ACCOUNT INFORMATION

COMMUNICATION MODULE 13

INPUT/OUTPUT DEVICE 14

# FIG. 5

COMPANY TERMINAL 2

CONTROL UNIT 21
- CPU
- RAM
- ROM

STORAGE UNIT 22
- PROGRAM

COMMUNICATION MODULE 23

INPUT/OUTPUT DEVICE 24

# FIG. 6

SERVER DEVICE 1

CONTROL UNIT 11

INFORMATION
COLLECTION UNIT
111

AUTHORITY
SETTING UNIT
112

LINKING UNIT
113

INFORMATION
PROVISION UNIT
114

VERIFICATION UNIT
115

IMPROVEMENT
NOTIFICATION UNIT
116

STORAGE UNIT 12

ACCOUNT
INFORMATION

STORAGE AREA

PRODUCT
INFORMATION

STORAGE AREA

PRODUCT
INFORMATION

STORAGE AREA

# FIG. 7

COMPANY TERMINAL 2

CONTROL UNIT 21

PRODUCT INFORMATION
GENERATION UNIT 211

AUTHORITY
SETTING UNIT 212

LINKAGE
REQUEST UNIT 213

INFORMATION
ACQUISITION UNIT 214

NOTIFICATION
RECEPTION UNIT 215

# FIG. 8

| COMPANY ID | | C001 |
|---|---|---|
| COMPANY NAME | | COMPANY A |
| COMPANY ID | | P001 |
| PRODUCT NAME | | PRODUCT A |
| LINKING-RELATED INFORMATION | UPSTREAM PRODUCT INFORMATION | (NOT LINKED) |
| | TERMINAL FLAG | (NOT SET) |
| TRACEABILITY -RELATED INFORMATION | MATERIAL USAGE AMOUNT (LITHIUM) | X[g] |
| | MATERIAL USAGE AMOUNT (NICKEL) | X[g] |
| | MATERIAL USAGE AMOUNT (COBALT) | X[g] |
| | MATERIAL USAGE AMOUNT (LEAD) | X[g] |
| | $CO_2$ EMISSION AMOUNT DURING PRODUCTION | X[g] |
| | DD INFORMATION | *** |
| *** | *** | *** |

# FIG. 9

PRODUCT
INFORMATION A
OF COMPANY A

PRODUCT
INFORMATION B
OF COMPANY B

INFORMATION COLLECTION
UNIT 111

STORAGE AREA B
DEDICATED TO
COMPANY B

PRODUCT INFORMATION B

STORAGE AREA AB
SHARED BY
COMPANIES A, B

PRODUCT INFORMATION B

STORAGE AREA A
DEDICATED TO
COMPANY A

PRODUCT INFORMATION A

GRANT ACCESS AUTHORITY
TO COMPANY A BY COPYING
PRODUCT INFORMATION
TO SHARED AREA

ACQUIRE PRODUCT
INFORMATION
THAT COMPANY A
CAN ACCESS AND
PROVIDE PRODUCT
INFORMATION TO
COMPANY A

LINKING IS
PERFORMED
BY UPDATING
PRODUCT
INFORMATION A

AUTHORITY SETTING UNIT
112

PERMISSION INFORMATION
THAT ALLOWS ACCESS
FROM COMPANY A
TO PRODUCT INFORMATION B

GENERATE
PRODUCT TREE
BASED ON
PRODUCT INFORMATION

LINKING UNIT
113

INFORMATION
PROVISION UNIT
114

PRODUCT TREE

EP 4 443 356 A1

# FIG. 10

# FIG. 11

# FIG. 12

```
                    ( START )
                        │
                        │                         ┌─ S101
        ┌───────────────────────────────┐
        │  RECEIVE FINAL PRODUCT AS TARGET │
        │      AND TRACEABILITY ITEM       │
        └───────────────────────────────┘
                        │                         ┌─ S102
        ┌───────────────────────────────┐
        │      SPECIFY PLURALITY OF        │
        │       INCLUDED PRODUCTS          │
        └───────────────────────────────┘
                        │                         ┌─ S103
        ┌───────────────────────────────┐
        │      CALCULATE INTEGRATED CFP    │
        └───────────────────────────────┘
                        │                         ┌─ S104
                       ╱ ╲
                      ╱   ╲
              INTEGRATED CFP > TARGET VALUE ──── NO ──┐
                      ╲   ╱                            │
                       ╲ ╱                             │
                        │                              │
                       YES                             │
                        │                         ┌─ S105
        ┌─┬───────────────────────────┬─┐            │
        │ │       IMPROVEMENT          │ │            │
        │ │    REQUEST PROCESSING      │ │            │
        └─┴───────────────────────────┴─┘            │
                        │                             │
                        │◄────────────────────────────┘
                        ▼
                    ( END )
```

# FIG. 13

START

SET REFERENCE VALUE OF
SUBJECT COMPANY'S CFP — S201

CALCULATE DEGREE OF ACHIEVEMENT — S202

SPECIFY FIRST PRODUCT — S203

TRANSMIT IMPROVEMENT REQUEST — S204

END

# FIG. 14

START

RECEIVE
COMPLETION NOTIFICATION? — S301

NO

YES

EVALUATION PROCESSING — S302

END

# FIG. 15

SERVER DEVICE 1

CONTROL UNIT 11

INFORMATION COLLECTION UNIT 111

AUTHORITY SETTING UNIT 112

LINKING UNIT 113

INFORMATION PROVISION UNIT 114

EVALUATION UNIT 115

IMPROVEMENT NOTIFICATION UNIT 116

STORAGE UNIT 12

ACCOUNT INFORMATION

STORAGE AREA

PRODUCT INFORMATION

STORAGE AREA

PRODUCT INFORMATION

STORAGE AREA

INVENTORY DATA

# FIG. 16

START

EXTRACT INCLUDED PRODUCT
IN WHICH INVENTORY DATA IS
REGISTERED ⌐ S401

SPECIFY FIRST PRODUCT ⌐ S402

TRANSMIT IMPROVEMENT
REQUEST ⌐ S403

END

Europäisches
Patentamt

European
Patent Office

Office européen
des brevets

**EUROPEAN SEARCH REPORT**

Application Number

EP 24 16 4617

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Birke Kai Peter ET AL: "Chapter 8: Digitalization Concepts for the Supply Chain Management in Battery Manufacturing" In: "Handbook on Smart Battery Cell Manufacturing : The Power of Digitalization", 23 June 2022 (2022-06-23), WORLD SCIENTIFIC, XP093171918, pages 171-189, DOI: 10.1142/9789811245626_0009, Retrieved from the Internet: URL:https://www.worldscientific.com/worldscibooks/10.1142/12511#t=aboutBook> * the whole document * | 1-15 | INV. G06Q10/06 |
| A | US 2021/012278 A1 (ALON HAGGAI [IL] ET AL) 14 January 2021 (2021-01-14) * abstract * | 1-15 | |
| A | EP 1 630 735 A1 (HITACHI LTD [JP]) 1 March 2006 (2006-03-01) * abstract * | 1-15 | TECHNICAL FIELDS SEARCHED (IPC) G06Q |
| A | US 2019/147397 A1 (HODGES MATTHEW [US]) 16 May 2019 (2019-05-16) * abstract * | 1-15 | |
| A | ASIF AMIR ET AL: "Further Cost Reduction of Battery Manufacturing", BATTERIES, vol. 3, no. 4, 1 June 2017 (2017-06-01), page 17, XP093171570, Basel ISSN: 2313-0105, DOI: 10.3390/batteries3020017 Retrieved from the Internet: URL:https://www.mdpi.com/2313-0105/3/2/17> * abstract * | 1-15 | |

-/--

The present search report has been drawn up for all claims

| Place of search | Date of completion of the search | Examiner |
|---|---|---|
| Munich | 29 July 2024 | Weidmann, Matthias |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

**Application Number**

EP 24 16 4617

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | AGRAWAL TARUN KUMAR ET AL: "Blockchain-based framework for supply chain traceability: A case example of textile and clothing industry", COMPUTERS & INDUSTRIAL ENGINEERING, vol. 154, 18 January 2021 (2021-01-18), page 107130, XP093170879, AMSTERDAM, NL ISSN: 0360-8352, DOI: 10.1016/j.cie.2021.107130 Retrieved from the Internet: URL:https://www.sciencedirect.com/science/article/pii/S0360835221000346> * abstract * ----- | 1-15 | |

| | TECHNICAL FIELDS SEARCHED (IPC) |
|---|---|

The present search report has been drawn up for all claims

| Place of search | Date of completion of the search | Examiner |
|---|---|---|
| Munich | 29 July 2024 | Weidmann, Matthias |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 16 4617

This annex lists the patent family members relating to the patent documents cited in the above-mentioned European search report.
The members are as contained in the European Patent Office EDP file on
The European Patent Office is in no way liable for these particulars which are merely given for the purpose of information.

29-07-2024

| Patent document cited in search report | | Publication date | Patent family member(s) | | Publication date |
|---|---|---|---|---|---|
| US 2021012278 | A1 | 14-01-2021 | AU | 2019234176 A1 | 12-11-2020 |
| | | | CN | 112106092 A | 18-12-2020 |
| | | | EP | 3765979 A1 | 20-01-2021 |
| | | | IL | 277328 A | 29-10-2020 |
| | | | JP | 2021517686 A | 26-07-2021 |
| | | | KR | 20200142510 A | 22-12-2020 |
| | | | US | 2021012278 A1 | 14-01-2021 |
| | | | WO | 2019175878 A1 | 19-09-2019 |
| EP 1630735 | A1 | 01-03-2006 | CN | 1744118 A | 08-03-2006 |
| | | | EP | 1630735 A1 | 01-03-2006 |
| | | | JP | 4140587 B2 | 27-08-2008 |
| | | | JP | 2006072404 A | 16-03-2006 |
| | | | US | 2006047536 A1 | 02-03-2006 |
| US 2019147397 | A1 | 16-05-2019 | EP | 3455738 A1 | 20-03-2019 |
| | | | US | 2019147397 A1 | 16-05-2019 |
| | | | WO | 2017196655 A1 | 16-11-2017 |

EPO FORM P0459

For more details about this annex : see Official Journal of the European Patent Office, No. 12/82

**EP 4 443 356 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2004171146 A